# EUROPEAN PATENT APPLICATION

(11) **EP 4 632 051 A1**
(43) Date of publication of application: **15.10.2025**
(21) Application number: 23900321.3
(22) Date of filing: 19.10.2023
(51) Int. Cl.: C10M 171/00, C10N 20/00, C10N 30/00, C10N 30/08, C10N 40/00

(54) **LUBRICANT OIL COMPOSITION, AND CIRCULATION SYSTEM USING LUBRICANT OIL COMPOSITION**

(30) Priority: 07.12.2022 JP 2022195818
(71) Applicant: Idemitsu Kosan Co.,Ltd., Tokyo 100-8321 (JP)
(72) Inventor: TAKEKAWA, Daisuke, Tokyo 100-8321 (JP); NAKAHARA, Yasuhito, Tokyo 100-8321 (JP); MATSUBARA, Kazushige, Tokyo 100-8321 (JP); TATSUMI, Hiroyuki, Tokyo 100-8321 (JP); NARITA, Keiichi, Tokyo 100-8321 (JP); NARA, Atsushi, Tokyo 100-8321 (JP)
(74) Representative: Vossius & Partner Patentanwälte Rechtsanwälte mbB
(86) International application number: PCT/JP2023/037864
(87) International publication number: WO 2024/122199

(57) **Abstract**

To obtain a lubricating oil composition capable of controlling temperatures of a secondary battery, an electric motor, and a reduction gear, and a circulation system using the lubricating oil composition. A lubricating oil composition to be circulated in a circulation circuit connected to at least a secondary battery, an electric motor, and a reduction gear, and to be used to control temperatures of at least the secondary battery, the electric motor, and the reduction gear, wherein: in accordance with a "cooling performance test method: method A" specified in JIS K2242:2012, a silver bar with an initial surface temperature T₀ of 200°C is placed in a lubricating oil composition at 80°C, and a surface temperature T₁₂ (°C) of the silver bar is measured 12 seconds later, and a silver bar temperature change amount ΔT calculated from T₀ - T₁₂ is 70°C or higher; a flash point measured by a Cleveland open cup method (C.O.C method) in accordance with JIS K2265-4:2007 is 100°C or higher; and a volume resistivity measured in accordance with JIS C2101:1999 is 1.0 × 10⁷ Ω·cm or more.

## Description

### Technical Field

The present invention relates to a lubricating oil composition circulating in a circulation circuit connected to an object, and a circulation system using the lubricating oil composition.

### Related Art

Conventionally, a battery cooling system has been known that includes a circulation circuit for circulating oil common to a transaxle, a battery, and an oil cooler, and uses the oil for lubricating the transaxle to cool the battery. Inside the case that houses the transaxle, an electric motor is provided and the oil is used to cool the electric motor (Patent Literature 1).

### Citation List

### Patent Literature

### Patent Literature 1

Japanese Patent Laid-Open No. 2020-62964

### Summary of Invention

Some electric motors have semiconductors, which generate heat when the electric motors are operating. In addition, electricity flows through the battery and the transaxle. Therefore, an oil flowing through these is required to have heat resistance and insulation properties.

The present invention provides a lubricating oil composition and a circulation system using the lubricating oil composition. Specific aspects of the present invention are as in the following [1] to [15].
[1] A lubricating oil composition to be circulated in a circulation circuit connected to at least a secondary battery, an electric motor, and a reduction gear, and to be used to control temperatures of at least the secondary battery, the electric motor, and the reduction gear, wherein:
   in accordance with a "cooling performance test method: method A" specified in JIS K2242:2012, a silver bar with an initial surface temperature T₀ of 200°C is placed in a lubricating oil composition with a temperature of 80°C, and a surface temperature T₁₂ (°C) of the silver bar is measured 12 seconds later, and a silver bar temperature change amount ΔT calculated from T₀ - T₁₂ is 70°C or higher;
   a flash point measured by a Cleveland open cup method (C.O.C method) in accordance with JIS K2265-4:2007 is 100°C or higher; and
   a volume resistivity measured in accordance with JIS C2101:1999 is 1.0 × 10⁷ Ω·cm or more.
[2] The lubricating oil composition according to the above [1], having a kinematic viscosity of 5.0 to 40.0 mm²/s at 30°C.
[3] The lubricating oil composition according to the above [1] or [2], comprising a base oil and one or more lubricating oil additives selected from an anti-wear agent, a metal deactivator, a metal detergent, a dispersant, and an antifoaming agent.
[4] The lubricating oil composition according to any one of the above [1] to [3], having a transmittance of 90% or more.
[5] A circulation system, including a circulation circuit connected to at least a secondary battery, an electric motor, and a reduction gear, wherein the circulation circuit is capable of circulating the lubricating oil composition according to any one of the above [1] to [4], and controls temperatures of at least the secondary battery, the electric motor, and/or the reduction gear.
[6] The circulation system according to the above [5], wherein the circulation circuit further comprises a first path connected to the secondary battery and a second path connected to the electric motor and the reduction gear.
[7] The circulation system according to the above [6], wherein the first path and the second path are both connected to the same radiator.
[8] The circulation system according to the above [6] or [7], wherein the first path and the second path are connected in parallel.
[9] The circulation system according to the above [6] or [7], wherein at least part of the circulation circuit connects the secondary battery, the electric motor, and the reduction gear in series.
[10] The circulation system according to any one of the above [6] to [9], wherein the first path and the second path each comprise an oil pump, or either the first path or the second path has an oil pump.
[11] The circulation system according to any one of the above [6] to [10], wherein the first path and the second path are both connected to the same oil tank.
[12] The circulation system according to any one of the above [6] to [11], wherein the first path and the second path are both connected to the same oil pump.
[13] The circulation system according to any one of the above [6] to [12], further including a control valve provided at a connection between the first path and the second path.
[14] The circulation system according to any one of the above [6] to [13], further including a control valve for controlling a flow of the lubricating oil composition from an oil cooler to the first path and/or the second path.
[15] The circulation system according to the above [13] or [14], wherein the control valve opens and closes depending on a temperature of the secondary battery.
[16] The circulation system according to any one of the above [13] to [15], wherein the control valve opens and closes depending on temperatures of the electric motor and the reduction gear.

According to the lubricating oil composition and the circulation system using the lubricating oil composition, which are a preferred aspect of the present invention, it is possible to obtain a lubricating oil composition and a circulation system using the lubricating oil composition capable of controlling the temperatures of a secondary battery, an electric motor, and a reduction gear.

### Brief Description of Drawings

[Figure 1] Figure 1 is a schematic diagram showing an example of a circulation system according to the present invention.
[Figure 2] Figure 2 is a schematic diagram showing an example of a circulation system according to the present invention.
[Figure 3] Figure 3 is a schematic diagram showing an example of the circulation system according to the present invention.
[Figure 4] Figure 4 is a schematic diagram showing an example of a circulation system according to the present invention.
[Figure 5] Figure 5 is a schematic diagram showing an example of the circulation system according to the present invention.
[Figure 6] Figure 6 is a schematic diagram showing an example of the circulation system according to the present invention.
[Figure 7] Figure 7 is a schematic diagram showing an example of the circulation system according to the present invention.
[Figure 8] Figure 8 is a schematic diagram showing an example of a circulation system according to the present invention.
[Figure 9] Figure 9 is a schematic diagram showing an example of a circulation system according to the present invention.

### Description of Embodiments

### [Constitution of lubricating oil composition]

First, a lubricating oil composition according to an embodiment of the present invention will be described.

The lubricating oil composition of the present invention is a lubricating oil composition that is circulated in a circulation circuit connected to at least a secondary battery, an electric motor, and a reduction gear, and is used to control the temperatures of at least the secondary battery, the electric motor, and the reduction gear. The lubricating oil composition satisfies the following requirements (I) to (III).

Requirement (I): In accordance with the "cooling performance test method: method A" specified in JIS K2242:2012, a silver bar with an initial surface temperature T₀ of 200°C is placed in a lubricating oil composition at 80°C, the surface temperature T₁₂ (°C) of the silver bar is measured 12 seconds later, and the silver bar temperature change amount ΔT calculated from T₀ - T₁₂ is 70°C or more.

Requirement (II): The flash point measured by the Cleveland open cup method (C.O.C. method) in accordance with JIS K2265-4:2007 is 100°C or higher.

Requirement (III): The volume resistivity measured in accordance with JIS C2101:1999 is 1.0 x 10⁷ Ω·cm or more.

The lubricating oil composition of the present invention circulates in a circulation circuit connected to at least a secondary battery, an electric motor and a reduction gear, but the required characteristics for the individual devices are different.

For example, characteristics are required that can have high cooling performance for a secondary battery so as to keep the temperature of the secondary battery constant. In contrast, the electric motor and the reduction gear have a relatively high allowable temperature and therefore do not require as high cooling performance as the secondary battery, but require safety and lubrication performance. The lubricating composition circulating in the circulation circuit connected to the secondary battery, the electric motor, and the reduction gear is also required to have high insulation properties.

As described above, since lubricating oil compositions for cooling and/or lubricating secondary batteries, electric motors, and reduction gears have different required performances, different lubricating oil compositions have been used for each device so far. However, the lubricating oil composition circulating through these devices needs to satisfy all of the performance required for these devices.

For this reason, the lubricating oil composition of the present invention is adjusted to satisfy the above requirements (I) to (III).

Requirement (I) specifies the cooling performance of the lubricating oil composition. A lubricating oil composition satisfying requirement (I) has high cooling performance, and is particularly capable of keeping the temperature of a secondary battery constant.

From the above viewpoint, the silver bar temperature change rate ΔT specified in requirement (I) may be 72°C or more, 74°C or more, or 76°C or more.

Note that the silver bar temperature change rate ΔT specified in the requirement (I) can be increased by adjusting the kinematic viscosity of the lubricating oil composition to a low value. However, if the kinematic viscosity of the lubricating oil composition is set too low, adjustment may be difficult to satisfy the requirement (II).

Requirement (II) specifies the safety of the lubricating oil composition. For example, an electric motor may become temporarily hot, and at that time, there is a risk of the lubricating oil composition catching fire. Requirement (II) is a requirement for the lubricating oil composition to ensure safety, particularly in use to lubricate an electric motor.

From the above viewpoint, the flash point specified in requirement (II) may be 110°C or more, 120°C or more, 130°C or more, 140°C or more, 150°C or more, 160°C or more, or 170°C or more.

Note that the flash point specified in requirement (II) can be increased by adjusting the kinematic viscosity of the lubricating oil composition to be high. However, if the kinematic viscosity of the lubricating oil composition is set too high, adjustment may be difficult to satisfy the requirement (I).

Requirement (III) specifies the insulation properties of the lubricating oil composition. The lubricating composition circulating in the circulation circuit connected to the secondary battery, the electric motor, and the reduction gear is required to have high insulation properties.

From the above viewpoint, the volume resistivity specified in requirement (III) may be 5.0 × 10⁷ Ω·cm or more, 1.0 × 10⁸ Ω·cm or more, 5.0 × 10⁸ Ω·cm or more, or 1.0 × 10⁹ Ω·cm or more.

The volume resistivity specified in requirement (III) can be adjusted by selecting a base oil with low polarity for the base oil used in the lubricating oil composition.

The kinematic viscosity at 30°C of the lubricating oil composition of an aspect of the present invention may be 5.0 mm²/s or more, 6.0 mm²/s or more, 7.0 mm²/s or more, 8.0 mm²/s or more, 9.0 mm²/s or more, 10.0 mm²/s or more, or 11.0 mm²/s or more, from the viewpoint of adjusting the lubricating oil composition to satisfy the requirement (II) and have excellent lubricating performance. The kinematic viscosity at 30°C may also be 40.0 mm²/s or less, 35.0 mm²/s or less, 30.0 mm²/s or less, 25.0 mm²/s or less, 20.0 mm²/s or less, or 15.0 mm²/s or less, from the viewpoint of adjusting the lubricating oil composition to satisfy the requirement (I).

In particular, adjusting the kinematic viscosity at 30°C to the above range can exhibit high cooling performance for the secondary battery to keep the temperature of the secondary battery constant while satisfactorily keeping cooling and lubrication performance for the electronic motor and the reduction gear. Therefore, the lubricating oil composition can be more suitable for use in which it is circulated through a circulation circuit connected to at least a secondary battery, an electric motor, and a reduction gear for controlling the temperatures of at least the secondary battery, the electric motor, and the reduction gear.

The kinematic viscosity at 40°C of the lubricating oil composition of an aspect of the present invention may be 3.0 mm²/s or more, 4.0 mm²/s or more, 5.0 mm²/s or more, 6.0 mm²/s or more, 7.0 mm²/s or more, or 8.0 mm²/s or more, from the viewpoint of adjusting the lubricating oil composition to satisfy the requirement (II) and have excellent lubricating performance. The kinematic viscosity at 40°C may also be 30.0 mm²/s or less, 25.0 mm²/s or less, 20.0 mm²/s or less, 15.0 mm²/s or less, or 10.0 mm²/s or less, from the viewpoint of adjusting the lubricating oil composition to satisfy the requirement (I).

The kinematic viscosity at 100°C of the lubricating oil composition of an aspect of the present invention may be 1.0 mm²/s or more, 1.2 mm²/s or more, 1.5 mm²/s or more, 1.7 mm²/s or more, 2.0 mm²/s or more, or 2.2 mm²/s or more, from the viewpoint of adjusting the lubricating oil composition to satisfy the requirement (II) and have excellent lubricating performance. The kinematic viscosity at 100°C may also be 5.0 mm²/s or less, 4.5 mm²/s or less, 4.0 mm²/s or less, 3.5 mm²/s or less, or 3.0 mm²/s or less, from the viewpoint of adjusting the lubricating oil composition to satisfy the requirement (I).

The viscosity index of the lubricating oil composition of an aspect of the present invention may be 70 or more, 80 or more, 90 or more, 100 or more, 110 or more, or 120 or more.

Note that the kinematic viscosity and viscosity index at each temperature herein mean values measured and calculated in accordance with JIS K2283:2000.

The transmittance of the lubricating oil composition of an aspect of the present invention may be 90% or more, 93% or more, 95% or more, or 97% or more.

Note that the transmittance of a lubricating oil composition herein means a value measured at a wavelength of 600 nm in accordance with JIS K0115.

The lubricating oil composition according to an aspect of the present invention contains a base oil and may further contain lubricating oil additives.

The following describes the base oil and the lubricating oil additives that may be contained in the lubricating oil composition of an aspect of the present invention.

### <Base oil>

The base oils contained in the lubricating oil composition used in an aspect of the present invention comprise one or more selected from mineral oils and synthetic oils.

The examples of mineral oils comprise: atmospheric residual oils obtained by atmospheric distillation of crude oils such as paraffinic crude oil, intermediate crude oil, and naphthenic crude oil; distillate oils obtained by vacuum distillation of these atmospheric residual oils; and refined oils obtained by subjecting the distillate oils to one or more refining processes such as solvent deasphalting, solvent extraction, hydrocracking, solvent dewaxing, catalytic dewaxing, and hydrorefining.

Examples of synthetic oils comprise: poly-α-olefins such as α-olefin homopolymers or α-olefin copolymers (for example, α-olefin copolymers having 8 to 14 carbon atoms, such as ethylene-α-olefin copolymers); isoparaffins; polyalkylene glycols; ester-based oils such as polyol esters, dibasic acid esters, and phosphate esters; ether-based oils such as polyphenyl ether; alkylbenzenes; alkylnaphthalenes; and synthetic oils (GTL) obtained by isomerizing wax (GTL wax (Gas To Liquids WAX)) produced from natural gas by the Fischer-Tropsch process.

Among these, the base oil used in an aspect of the present invention is preferably a base oil with low polarity from the viewpoint of adjusting the lubricating oil composition to satisfy the requirement (III), and more preferably contains one or more selected from mineral oils and poly-α-olefins.

In the lubricating oil composition of an aspect of the present invention, the content of the base oil may be 50 mass% or more, 60 mass% or more, 70 mass% or more, 75 mass% or more, 80 mass% or more, 85 mass% or more, 90 mass% or more, or 93 mass% or more, based on the total amount (100 mass%) of the lubricating oil composition. The content of the base oil may also be 100 mass% or less, 99 mass% or less, 98 mass% or less, or 97 mass% or less, based on the total amount (100 mass%) of the lubricating oil composition.

### <Lubricating oil additives>

The lubricating oil composition to be used in an aspect of the present invention may contain lubricating oil additives together with the base oil depending on the application, within a range that does not impair the effects of the present invention.

Examples of lubricating oil additives comprise pour point depressants, viscosity index improvers, extreme pressure agents, antioxidants, metal detergents, ashless dispersants, anti-wear agents, anti-emulsifiers, friction modifiers, rust inhibitors, metal deactivators, antistatic agents, and antifoaming agents.

These lubricating oil additives may be used alone or in combination of two or more.

As a specific aspect, the lubricating oil composition to be used in an aspect of the present invention may be a lubricating oil composition comprising a base oil and one or more lubricating oil additives selected from anti-wear agents, metal deactivators, metal detergents, dispersants, and antifoaming agents.

The content of each of these lubricating oil additives can be prepared appropriately within a range that does not impair the effects of the present invention. However, the content is usually 0.001 to 15 mass%, preferably 0.005 to 10 mass%, and more preferably 0.01 to 5 mass%, independently for each additive, based on the total amount (100 mass%) of the lubricating oil composition.

### [Circulation system]

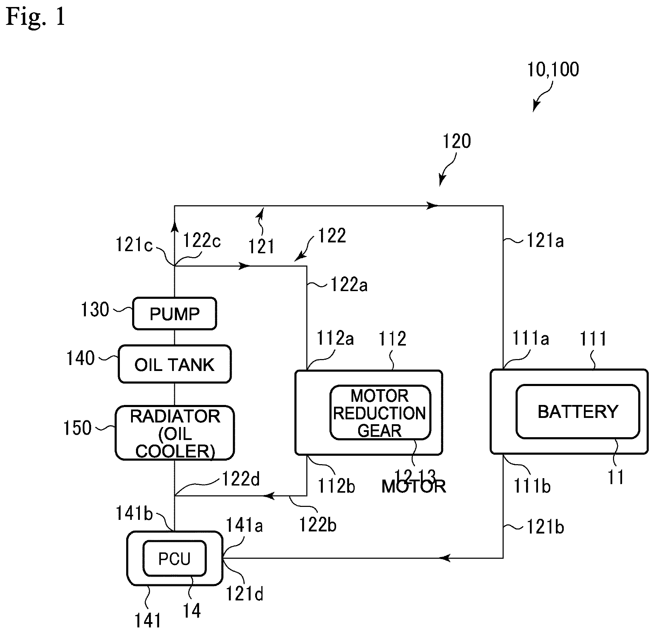

First, a first embodiment of the present invention will be described with reference to Figure 1. Figure 1 shows a first circulation system 100 mounted on a vehicle 10. The vehicle 10 mainly comprises a secondary battery 11, an electric motor 12, a reduction gear 13, and a PCU (Power Control Unit) 14. Around the secondary battery 11, a battery cooling jacket 111 is provided so as to be in close contact with the secondary battery 11. Around the electric motor 12 and the reduction gear 13, a motor cooling jacket 112 is provided so as to be in close contact with the electric motor 12 and the reduction gear 13 to enable heat exchange. Around the PCU 14, a PCU cooling jacket 141 is provided so as to be in close contact with parts to be cooled in the PCU 14, such as semiconductors, to enable heat exchange. The battery cooling jacket 111, the motor cooling jacket 112, and the PCU cooling jacket 141 respectively comprise jacket inlets 111a, 112a, 141a, respectively comprise jacket outlets 111b, 112b, 141b, and are constructed to be liquid-tight.

The first circulation system 100 mainly comprises a battery cooling jacket 111, a motor cooling jacket 112, a PCU cooling jacket 141, a circulation circuit 120, an oil pump 130, an oil tank 140, and a radiator (oil cooler) 150.

The oil pump 130 is connected to the oil tank 140, and the oil tank 140 is connected to the radiator 150. The radiator 150 has an internal flow path that receives the lubricating oil composition and allows it to flow therethrough, and applies air or a liquid to a number of fins that are in contact with the outside of the internal flow path. The air or liquid exchanges heat with the lubricating oil composition, for example, to cool the lubricating oil composition, which is then sent to the oil tank 140. The oil tank 140 receives the lubricating oil composition from the radiator 150 and stores the lubricating oil composition. The oil pump 130 pumps the lubricating oil composition in the oil tank 140 to the outside.

The circulation circuit 120 comprises a first path 121 connected to the secondary battery 11 and a second path 122 connected to the electric motor 12 and the reduction gear 13, and is capable of circulating the lubricating oil composition.

The first path 121 mainly comprises a first inflow pipe 121a connecting the outlet of the oil pump 130 and the jacket inlet 111a of the battery cooling jacket 111, and a first outflow pipe 121b connecting the jacket outlet 111b of the battery cooling jacket 111 and the jacket inlet 141a of the PCU cooling jacket 141.

The second path 122 mainly comprises a second inflow pipe 122a connecting the outlet of the oil pump 130 and the jacket inlet 112a of the motor cooling jacket 112, and a second outflow pipe 122b connecting the jacket outlet 112b of the motor cooling jacket 112 and the inlet of the radiator 150.

The outlet 121d of the first path 121 is connected to the jacket inlet 141a of the PCU cooling jacket 141. The jacket outlet 141b of the PCU cooling jacket 141 is connected to the inlet of the radiator 150. The outlet of the radiator 150 is connected to the inlet of the oil tank 140. The outlet of the oil tank 140 is connected to the inlet of the oil pump 130.

The outlet 122d of the second path 122 is connected to the inlet of the radiator 150. The outlet of the radiator 150 is connected to the inlet of the oil tank 140. The outlet of the oil tank 140 is connected to the inlet of the oil pump 130. In other words, the first path 121 and the second path 122, or the secondary battery 11, and the electric motor 12 and the reduction gear 13 are connected in parallel to the radiator 150, the oil tank 140, and the oil pump 130. The first path 121 and the second path 122 are both connected to the same or one radiator 150, both connected to the same or one oil tank 140, and both connected to the same or one oil pump 130.

The following describes the flow of the lubricating oil composition in the first circulation system 100.

The lubricating oil composition stored in the oil tank 140 is pumped by the oil pump 130 to the first path 121 and the second path 122. The lubricating oil composition pumped to the second path 122 flows into the motor cooling jacket 112 through the second inflow pipe 122a, and cools the electric motor 12 and the reduction gear 13 to keep them at constant temperatures. This increases the temperature of the lubricating oil composition. The lubricating oil composition then is pumped to the radiator 150 through the second outflow pipe 122b. The radiator 150 cools the lubricating oil composition and sends it out to the oil tank 140. The radiator 150 keeps the temperature of the lubricating oil composition constant. Meanwhile, the lubricating oil composition pumped from the oil tank 140 to the first path 121 flows into the battery cooling jacket 111 through the first inflow pipe 121a, and keeps the secondary battery 11 at a temperature, that is, keeps the temperature of the secondary battery 11 constant. As described above, the lubricating oil composition in the oil tank 140 is kept at a constant temperature by the radiator 150. Therefore, when the temperature of the secondary battery 11 is lower than a desired temperature, the lubricating oil composition can warm the secondary battery 11, and when the temperature of the secondary battery 11 is higher than a desired temperature, the lubricating oil composition can cool the secondary battery 11. The lubricating oil composition then flows into the PCU cooling jacket 141 through a first outflow pipe 121b, and cools the PCU 14 to keep it at a constant temperature. This increases the temperature of the lubricating oil composition. The lubricating oil composition is then pumped from the PCU cooling jacket 141 to the radiator 150. The radiator 150 cools the lubricating oil composition and sends it out to the oil tank 140. The radiator 150 keeps the temperature of the lubricating oil composition constant.

The first circulation system 100 can control the temperatures of the secondary battery 11, the electric motor 12, and the reduction gear 13. More specifically, the first circulation system 100 can cool the electric motor 12 and the reduction gear 13 while keeping the temperature of the secondary battery 11 constant.

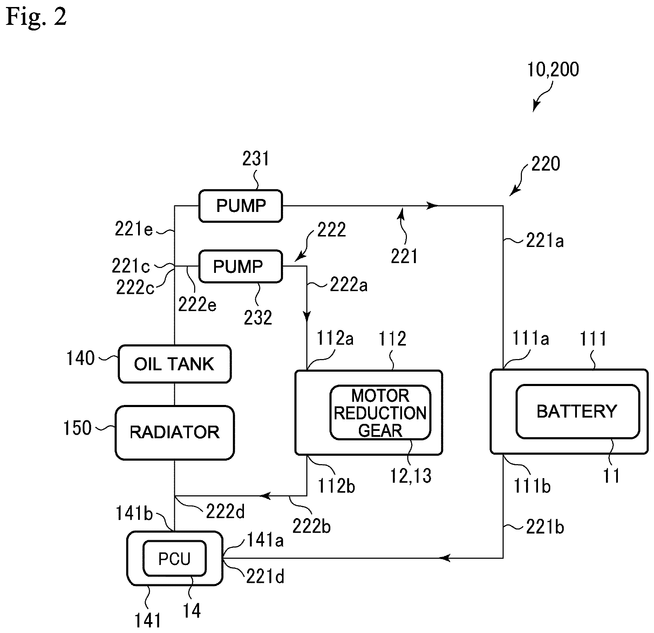

A second embodiment of the present invention will be described with reference to Figure 2. Figure 2 shows a second circulation system 200 mounted on a vehicle 10. The same components as in the first embodiment are given the same reference numerals and characters, and the description thereof will be omitted.

The second circulation system 200 mainly comprises a battery cooling jacket 111, a motor cooling jacket 112, a PCU cooling jacket 141, a circulation circuit 220, a first oil pump 231, a second oil pump 232, an oil tank 140, and a radiator (oil cooler) 150.

The first oil pump 231 and the second oil pump 232 are connected to the oil tank 140 and pump the lubricating oil composition in the oil tank 140 to the outside. The oil tank 140 is connected to the radiator 150, and receives the lubricating oil composition from the radiator 150 and stores the lubricating oil composition. The radiator 150 receives the lubricating oil composition, cools it, and sends it to the oil tank 140.

The circulation circuit 220 comprises a first path 221 connected to the secondary battery 11, and a second path 222 connected to the electric motor 12 and the reduction gear 13. The first path 221 mainly comprises a first inflow leading pipe 221e connecting the outlet of the oil tank 140 and the inlet of the first oil pump 231, a first inflow subsequent pipe 221a connecting the outlet of the first oil pump 231 and the jacket inlet 111a of the battery cooling jacket 111, and a first outflow pipe 221b connecting the jacket outlet 111b of the battery cooling jacket 111 and the jacket inlet 141a of the PCU cooling jacket 141.

The second path 222 mainly comprises a second inflow leading pipe 222e connecting the outlet of the oil tank 140 and the inlet of the second oil pump 232, a second inflow subsequent pipe 222a connecting the outlet of the second oil pump 232 and the jacket inlet 112a of the motor cooling jacket 112, and a second outflow pipe 222b connecting the jacket outlet 112b of the motor cooling jacket 112 and the inlet of the radiator 150.

The outlet 221d of the first path 221 is connected to the jacket inlet 141a of the PCU cooling jacket 141. The jacket outlet 141b of the PCU cooling jacket 141 is connected to the inlet of the radiator 150. The outlet of the radiator 150 is connected to the inlet of the oil tank 140.

The outlet 222d of the second path 222 is connected to the inlet of the radiator 150, and the outlet of the radiator 150 is connected to the inlet of the oil tank 140. In other words, the first path 221 and the second path 222, or the secondary battery 11, and the electric motor 12 and the reduction gear 13 are connected in parallel to the radiator 150 and the oil tank 140. The first path 221 and the second path 222 are both connected to the same or one radiator 150, and are also both connected to the same or one oil tank 140.

The following describes the flow of the lubricating oil composition in the second circulation system 200.

The lubricating oil composition stored in the oil tank 140 is pumped to the first path 221 and the second path 222 by the first oil pump 231 and the second oil pump 232, respectively. The lubricating oil composition pumped to the second path 222 flows into the motor cooling jacket 112 through the second inflow leading pipe 222e, the second oil pump 232, and the second inflow subsequent pipe 222a, and cools the electric motor 12 and the reduction gear 13 to keep them at constant temperatures. This increases the temperature of the lubricating oil composition. The lubricating oil composition is then pumped through the second outflow pipe 222b to the radiator 150. The radiator 150 cools the lubricating oil composition and sends it out to the oil tank 140. The radiator 150 keeps the temperature of the lubricating oil composition constant. Meanwhile, the lubricating oil composition pumped from the oil tank 140 to the first path 221 flows into the battery cooling jacket 111 through the first inflow leading pipe 221e, the first oil pump 231, and the first inflow subsequent pipe 221a, and keeps the secondary battery 11 at a temperature, that is, keeps the temperature of the secondary battery 11 constant. As described above, the lubricating oil composition in the oil tank 140 is kept at a constant temperature by the radiator 150. Therefore, when the temperature of the secondary battery 11 is lower than a desired temperature, the lubricating oil composition can warm the secondary battery 11, and when the temperature of the secondary battery 11 is higher than a desired temperature, the lubricating oil composition can cool the secondary battery 11. The lubricating oil composition then flows into the PCU cooling jacket 141 through a first outflow pipe 221b, and cools the PCU 14 to keep it at a constant temperature. This increases the temperature of the lubricating oil composition. The lubricating oil composition is then pumped from the PCU cooling jacket 141 to the radiator 150. The radiator 150 cools the lubricating oil composition and sends it out to the oil tank 140. The radiator 150 keeps the temperature of the lubricating oil composition constant.

The second circulation system 200 can control the temperatures of the secondary battery 11, the electric motor 12, and the reduction gear 13. More specifically, the second circulation system 200 can cool the electric motor 12 and the reduction gear 13 while keeping the temperature of the secondary battery 11 constant.

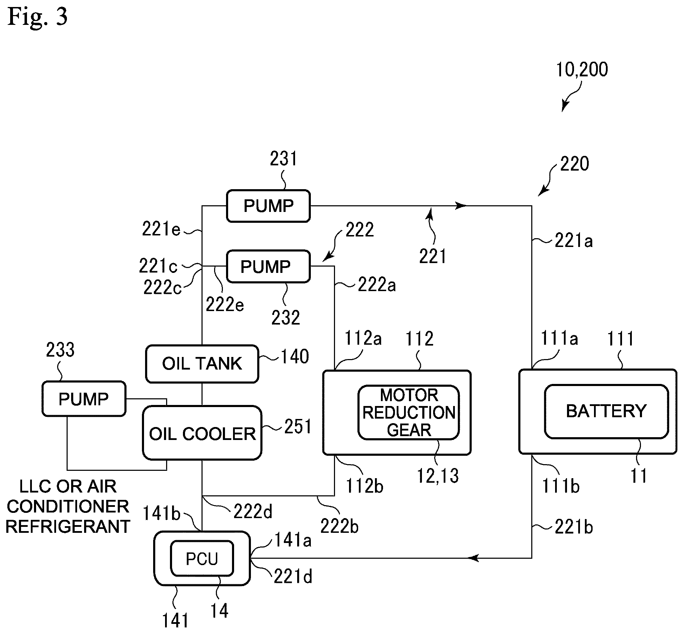

As shown in Figure 3, an oil cooler 251 may be used instead of the radiator 150. For example, a long-life coolant (LLC) or an air conditioner refrigerant is allowed to flow into such an oil cooler 251 using a pump 233, to cool the lubricating oil composition or keep its temperature constant.

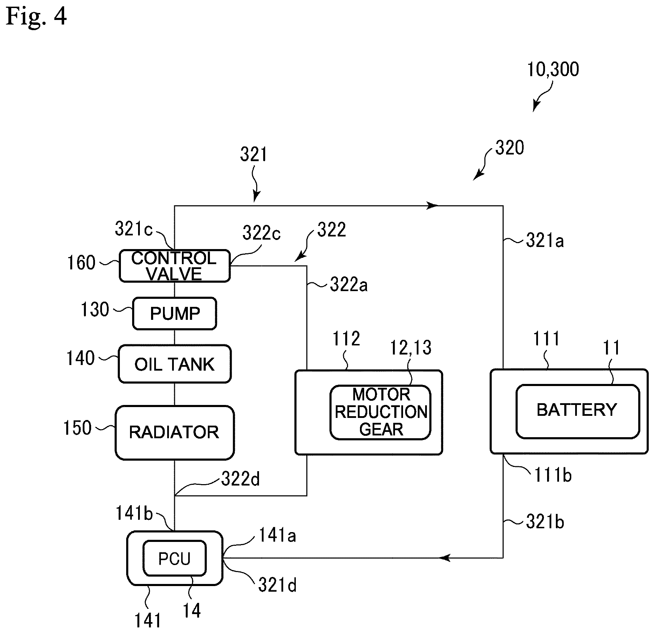

A third embodiment of the present invention will be described with reference to Figure 4. Figure 4 shows a third circulation system 300 mounted on a vehicle 10. The same components as in the first and second embodiments are given the same reference numerals and characters, and the description thereof will be omitted.

The third circulation system 300 mainly comprises a battery cooling jacket 111, a motor cooling jacket 112, a PCU cooling jacket 141, a circulation circuit 320, an oil pump 130, a control valve 160, an oil tank 140, and a radiator (oil cooler) 150.

The control valve 160 is connected to the oil pump 130, can be opened and closed based on the temperatures of at least the lubricating oil composition, the secondary battery 11, the electric motor 12, the reduction gear 13, and/or the PCU 14, and pumps the lubricating oil composition to the first path 321 and the second path 322. Furthermore, the control valve 160 can be opened and closed based on only the temperature of the secondary battery 11, or only the temperatures of the electric motor 12 and the reduction gear 13. The oil pump 130 is connected to the oil tank 140, and the oil tank 140 is connected to the radiator 150. The radiator 150 receives the lubricating oil composition, cools it, and sends it to the oil tank 140. The oil tank 140 receives the lubricating oil composition from the radiator 150 and stores the lubricating oil composition. The oil pump 130 pumps the lubricating oil composition in the oil tank 140 to the outside.

The circulation circuit 320 comprises a first path 321 connected to the secondary battery 11, and a second path 322 connected to the electric motor 12 and the reduction gear 13.

The first path 321 mainly comprises a first inflow pipe 321a connecting the outlet of the control valve 160 and the jacket inlet 111a of the battery cooling jacket 111, and a first outflow pipe 321b connecting the jacket outlet 111b of the battery cooling jacket 111 and the jacket inlet 141a of the PCU cooling jacket 141.

The second path 322 mainly comprises a second inflow pipe 322a connecting the outlet of the control valve 160 and the jacket inlet 112a of the motor cooling jacket 112, and a second outflow pipe 322b connecting the jacket outlet 112b of the motor cooling jacket 112 and the inlet of the radiator 150.

A control valve 160 is provided at the connection between the first path 321 and the second path 322, and controls the flow of the lubricating oil composition from the radiator (oil cooler) 150 to the first path 321 and/or the second path 322.

The outlet 321d of the first path 321 is connected to the jacket inlet 141a of the PCU cooling jacket 141. The jacket outlet 141b of the PCU cooling jacket 141 is connected to the inlet of the radiator 150. The outlet of the radiator 150 is connected to the inlet of the oil tank 140. The outlet of the oil tank 140 is connected to the inlet of the oil pump 130.

The outlet 322d of the second path 322 is connected to the inlet of the radiator 150. The outlet of the radiator 150 is connected to the inlet of the oil tank 140. The outlet of the oil tank 140 is connected to the inlet of the oil pump 130. In other words, the first path 321 and the second path 322, or the secondary battery 11, and the electric motor 12 and the reduction gear 13 are connected in parallel to the oil pump 130, the oil tank 140, and the radiator 150. The first path 321 and the second path 322 are both connected to the same or one radiator 150, both connected to the same or one oil tank 140, and both connected to the same or one oil pump 130.

The following describes the flow of the lubricating oil composition in the third circulation system 300.

The lubricating oil composition stored in the oil tank 140 is pumped to the control valve 160 by the oil pump 130. The control valve 160 opens and closes based on the temperatures of at least the lubricating oil composition, the secondary battery 11, the electric motor 12, the reduction gear 13, and/or the PCU 14, to pump the lubricating oil composition to the first path 321 and the second path 322.

The control valve 160 is capable of pumping the lubricating oil composition to both the first path 321 and the second path 322, or to either one of them. In addition, the flow rate to the first path 321 and the second path 322 can be adjusted.

For example, when the temperatures of the secondary battery 11, the electric motor 12, the reduction gear 13, and the PCU 14 are higher than the desired temperature, the lubricating oil composition is sent to the first path 321 and the second path 322, and lowers the temperatures of the secondary battery 11, the electric motor 12, the reduction gear 13, and the PCU 14 to the desired temperature. In this case, the flow rate to the first path 321 and the second path 322 is adjusted depending on the temperatures of these members.

For example, when the temperature of the secondary battery 11 is lower than a desired temperature and the temperature of the lubricating oil composition is higher than the desired temperature, the lubricating oil composition is sent to a first path 321, and increases the temperature of the secondary battery 11 to the desired temperature.

Therefore, when the temperature of the secondary battery 11 is lower than a desired temperature, the lubricating oil composition can warm the secondary battery 11, and when the temperature of the secondary battery 11 is higher than a desired temperature, the lubricating oil composition can cool the secondary battery 11.

The third circulation system 300 can control the temperatures of the secondary battery 11, the electric motor 12, and the reduction gear 13. More specifically, the third circulation system 300 can cool the electric motor 12 and the reduction gear 13 while keeping the temperature of the secondary battery 11 constant with higher accuracy.

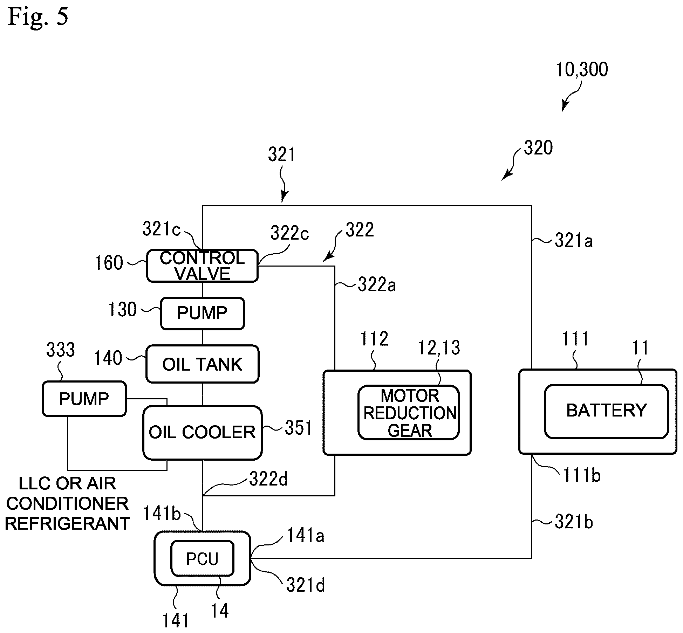

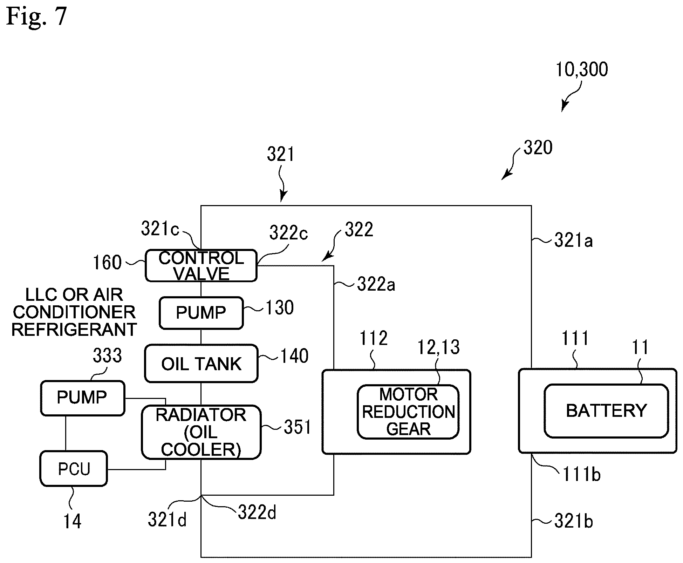

Here, as shown in Figure 5, an oil cooler 351 may be used instead of the radiator 150. For example, a long-life coolant (LLC) or an air conditioner refrigerant is allowed to flow into such an oil cooler 351 using a pump 333, to cool the lubricating oil composition or keep its temperature constant via the oil cooler 351. In addition to this, as shown in Figure 7, a long-life coolant (LLC) or an air conditioner refrigerant may be allowed to flow through a PCU cooling jacket 141 using a pump 333, to cool the PCU 14 or keep its temperature constant.

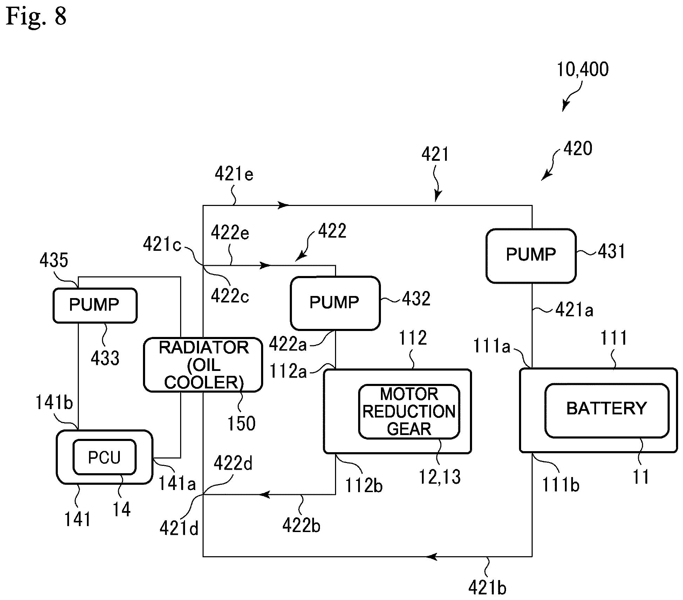

A fourth embodiment of the present invention will be described with reference to Figure 8. Figure 8 shows a fourth circulation system 400 mounted on a vehicle 10. The same components as in the first to third embodiments are given the same reference numerals and characters, and the description thereof will be omitted.

The fourth circulation system 400 mainly comprises a battery cooling jacket 111, a motor cooling jacket 112, a PCU cooling jacket 141, a circulation circuit 420, a first oil pump 431, a second oil pump 432, and a radiator (oil cooler) 150.

The first oil pump 431 and the second oil pump 432 are connected to the radiator 150, and pump the lubricating oil composition supplied from the radiator 150 to the outside. The radiator 150 receives and cools the lubricating oil composition.

The circulation circuit 420 comprises a first path 421 connected to the secondary battery 11, and a second path 422 connected to the electric motor 12 and the reduction gear 13.

The first path 421 mainly comprises a first inflow leading pipe 421e connecting the outlet of the radiator 150 and the inlet of the first oil pump 431, a first inflow subsequent pipe 421a connecting the outlet of the first oil pump 431 and the jacket inlet 111a of the battery cooling jacket 111, and a first outflow pipe 421b connecting the jacket outlet 111b of the battery cooling jacket 111 and the inlet of the radiator 150.

The second path 422 mainly comprises a second inflow leading pipe 422e connecting the outlet of the radiator 150 and the inlet of the second oil pump 432, a second inflow subsequent pipe 422a connecting the outlet of the second oil pump 432 and the jacket inlet 112a of the motor cooling jacket 112, and a second outflow pipe 422b connecting the jacket outlet 112b of the motor cooling jacket 112 and the inlet of the radiator 150.

The outlet 421d of the first path 421 and the outlet 422d of the second path 222 are connected to the inlet of the radiator 150. In other words, the first path 421 and the second path 422, or the secondary battery 11, and the electric motor 12 and the reduction gear 13 are connected in parallel to the radiator 150. The first path 421 and the second path 422 are both connected to the same or one radiator 150.

A third path 435, which is a system different from the first path 421 and the second path 422, is connected to the radiator (oil cooler) 150. The third path, to which a pump 433, a PCU cooling jacket 141, and a radiator 150 are connected, allows, for example, a long-life coolant (LLC) or an air conditioner refrigerant to flow using the pump 433, to cool the lubricating oil composition or keep its temperature constant via the radiator (oil cooler) 150. In addition, the third path 435 allows a long-life coolant (LLC) or an air conditioner refrigerant to flow through the PCU cooling jacket 141 using a pump 433, to cool the PCU 14 or keep its temperature constant.

The following describes the flow of the lubricating oil composition in the fourth circulation system 400.

The lubricating oil composition having flowed out of the radiator 150 is pumped by the first oil pump 431 and the second oil pump 432 to the first path 421 and the second path 422, respectively. The lubricating oil composition pumped to the second path 422 flows into the motor cooling jacket 112 through the second inflow leading pipe 422e, the second oil pump 432, and the second inflow subsequent pipe 422a, and cools the electric motor 12 and the reduction gear 13 to keep them at constant temperatures. This increases the temperature of the lubricating oil composition. The lubricating oil composition is then pumped through the second outflow pipe 422b to the radiator 150. The radiator 150 cools and sends out the lubricating oil composition. The radiator 150 keeps the temperature of the lubricating oil composition constant. Meanwhile, the lubricating oil composition pumped from the radiator 150 to the first path 421 flows into the battery cooling jacket 111 through the first inflow leading pipe 421e, the first oil pump 431, and the first inflow subsequent pipe 421a, and keeps the secondary battery 11 at a temperature, that is, keeps the temperature of the secondary battery 11 constant. As described above, the lubricating oil composition is kept at a constant temperature by the radiator 150. Therefore, when the temperature of the secondary battery 11 is lower than a desired temperature, the lubricating oil composition can warm the secondary battery 11, and when the temperature of the secondary battery 11 is higher than a desired temperature, the lubricating oil composition can cool the secondary battery 11. The lubricating oil composition then flows into the radiator 150 through the first outflow pipe 421b. The radiator 150 cools and sends out the lubricating oil composition. The radiator 150 keeps the temperature of the lubricating oil composition constant.

The fourth circulation system 400 can control the temperatures of the secondary battery 11, the electric motor 12, and the reduction gear 13. More specifically, the fourth circulation system 400 can cool the electric motor 12 and the reduction gear 13 while keeping the temperature of the secondary battery 11 constant.

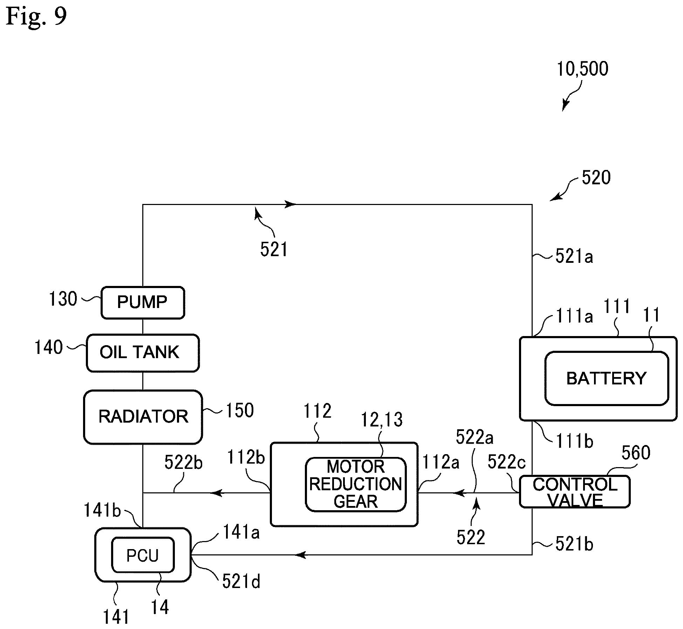

A fifth embodiment of the present invention will be described with reference to Figure 9. Figure 9 shows a fifth circulation system 500 mounted on a vehicle 10. The same components as in the first to fourth embodiments are given the same reference numerals and characters, and the description thereof will be omitted.

The fifth circulation system 500 mainly comprises a battery cooling jacket 111, a motor cooling jacket 112, a PCU cooling jacket 141, a circulation circuit 520, an oil pump 130, an oil tank 140, a radiator (oil cooler) 150, and a control valve 560. The configurations and connection relationships of the oil pump 130, the oil tank 140, and the radiator 150 are the same as those in the first embodiment, and the description thereof will be omitted.

The circulation circuit 520 comprises a first path 521 connected to the secondary battery 11 and a second path 522 connected to the electric motor 12 and the reduction gear 13, and is capable of circulating the lubricating oil composition.

The first path 521 mainly comprises a first inflow pipe 521a connecting the outlet of the oil pump 130 and the jacket inlet 111a of the battery cooling jacket 111, and a first outflow pipe 521b connecting the jacket outlet 111b of the battery cooling jacket 111 and the jacket inlet 141a of the PCU cooling jacket 141 through a control valve 560. The control valve 560 allows part of the lubricating oil composition flowing through the secondary battery 11 to flow to the second path 522. The outlet 521d of the first path 521 is connected to the jacket inlet 141a of the PCU cooling jacket 141. The jacket outlet 141b of the PCU cooling jacket 141 is connected to the inlet of the radiator 150.

The second path 522 mainly comprises a second inflow pipe 522a connecting the outlet of the control valve 560 and the jacket inlet 112a of the motor cooling jacket 112, and a second outflow pipe 522b connecting the jacket outlet 112b of the motor cooling jacket 112 and the inlet of the radiator 150. The outlet 522d of the second path 522 is connected to the inlet of the radiator 150. In other words, the secondary battery 11, the electric motor 12, and the reduction gear 13 are connected in series to the radiator 150, the oil tank 140, and the oil pump 130. The second path 522 and the first outflow pipe 521b are connected in parallel to the PCU 14. The first path 521 and the second path 522 are both connected to the same or one radiator 150, both connected to the same or one oil tank 140, and both connected to the same or one oil pump 130.

The following describes the flow of the lubricating oil composition in the fifth circulation system 500.

The lubricating oil composition having flowed out of the oil tank 140 is pumped by the oil pump 130 to the first path 521. The lubricating oil composition pumped to the first path 521 flows into the battery cooling jacket 111 through the first inflow pipe 521a, and keeps the secondary battery 11 at a temperature, that is, keeps the temperature of the secondary battery 11 constant. The lubricating oil composition having flowed out of the battery cooling jacket 111 flows into the control valve 560. The control valve 560 allows part of the lubricating oil composition having flowed out of the battery cooling jacket 111 to flow to the second path 522. The lubricating oil composition pumped to the second path 522 flows into the motor cooling jacket 112 through the second inflow pipe 522a, and cools the electric motor 12 and the reduction gear 13 to keep them at constant temperatures. This increases the temperature of the lubricating oil composition. The lubricating oil composition is then pumped through the second outflow pipe 522b to the radiator 150. The radiator 150 cools and sends out the lubricating oil composition. The radiator 150 keeps the temperature of the lubricating oil composition constant. The lubricating oil composition is then pumped by the oil pump 130 through the first path 521 to the battery cooling jacket 111. As described above, the lubricating oil composition is kept at a constant temperature by the radiator 150. Therefore, when the temperature of the secondary battery 11 is lower than a desired temperature, the lubricating oil composition can warm the secondary battery 11, and when the temperature of the secondary battery 11 is higher than a desired temperature, the lubricating oil composition can cool the secondary battery 11.

The fifth circulation system 500 can control the temperatures of the secondary battery 11, the electric motor 12, and the reduction gear 13. More specifically, the fifth circulation system 500 can cool the electric motor 12 and the reduction gear 13 while keeping the temperature of the secondary battery 11 constant.

Note that the fifth circulation system 500 may comprise an oil pump in the second inflow pipe 522a.

Note that the first to fifth circulation systems 100 to 500 each may comprise a secondary battery 11, an electric motor 12, a reduction gear 13, and a PCU (Power Control Unit) 14.

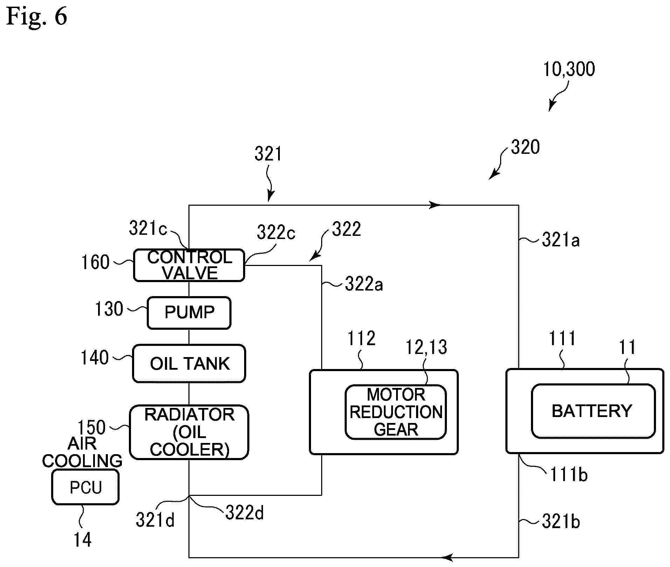

Note that in the first to third and fifth circulation systems 100 to 300, 500, the PCU 14 has been described that is cooled with a lubricating oil composition. However, the PCU 14 may be configured such that it is provided with no PCU cooling jacket 141 and is cooled with air rather than being cooled with the lubricating oil composition (for example, see Figure 6 as a modification of the third circulation system). At this time, the outlets 121d, 221d, 321d, 521d of the respective first paths 121, 221, 321, 521 are each connected to the inlet of the radiator 150.

Note that in any of the embodiments, a filter is preferably attached that can remove deposits from the lubricating oil composition behind the motor cooling jacket 112 in the flow direction of the lubricating oil composition.

Note that in any of the embodiments, an oil cooler may be used instead of the radiator. Such an oil cooler has an internal flow path that receives the lubricating oil composition and allows it to flow therethrough, and applies for example, a long-life coolant (LLC) or an air conditioner refrigerant using a pump to a number of fins that are in contact with the outside of the internal flow path. The long-life coolant (LLC) or air conditioner refrigerant exchanges heat with the lubricating oil composition, for example, to cool the lubricating oil composition or keep its temperature constant.

Note that in the present description and claims, the connection of the circulation circuit to the secondary battery, the electric motor, and/or the reduction gear comprises connection thereof to the battery cooling jacket and/or the motor cooling jacket.

According to the lubricating oil composition and the circulation system using this lubricating oil composition of a preferred aspect of the prevent invention, it is possible to obtain a lubricating oil composition and a circulation system using the lubricating oil composition capable of controlling the temperatures of a secondary battery, an electric motor, and a reduction gear.

### Examples

Next, the present invention will be described in more detail with reference to examples, but the present invention is not limited at all to these examples. The measurement and evaluation methods for various physical properties are as follows.

### (1) Kinematic viscosity, viscosity index

The measurement and calculation were performed in accordance with JIS K2283:2000.

### (2) Silver bar temperature change amount ΔT

In accordance with the "cooling performance test method: method A" specified in JIS K2242:2012, a silver bar was heated so that the initial surface temperature T₀ of the silver bar was 200°C, the heated silver bar was placed in each sample oil heated to 80°C, and the temperature T₁₂ (°C) of the silver bar surface was measured 12 seconds after the silver bar was placed therein. Then, T₀ - T₁₂ was calculated as the silver bar temperature change amount ΔT.

### (3) Flash point

The measurements were performed through the Cleveland open cup method (C.O.C. method) in accordance with JIS K2265-4:2007.

### (4) Volume resistivity

The measurements were performed at a temperature of 80°C and 250 V in accordance with JIS C2101:1999.

### (5) Shell wear test

A shell wear test was performed with each sample oil in accordance with ASTM D2783 with a four-ball tester at a rotation speed of 1800 rpm, a load of 392 N, an oil temperature of 80°C, and a test time of 30 minutes, and the average value of wear scar diameter of three 1/2 inch balls was calculated. The smaller the wear scar diameter, the better the wear resistance.

### (6) Observation of the appearance of the lubricating oil composition

The lubricating oil composition to be measured was poured into a transparent test tube, and the appearance of the test tube was visually observed and evaluated according to the following criteria.
A: The sample oil is transparent with no cloudiness observed.
F: The sample oil is opaque and cloudy.

### (7) Transmittance of lubricating oil composition

The transmittance of each lubricating oil composition to be measured was measured at a wavelength of 600 nm in accordance with JIS K0115.

### Examples 1 to 2, Comparative Examples 1 to 4

The lubricating oil compositions were prepared each by adding a base oil and an additive mixture of the type and amount shown in Table 1. Details of the individual components used in the preparation of each lubricating oil composition are as follows:

### <Base oil>

"Mineral oil A": Paraffinic mineral oil with a kinematic viscosity at 40°C of 8.1 mm²/s.

"Mineral oil B": Paraffinic mineral oil with a kinematic viscosity at 40°C of 1.6 mm²/s.

"Mineral oil C": Paraffinic mineral oil with a kinematic viscosity at 40°C of 31.4 mm²/s.

"Mineral oil D": Paraffinic mineral oil with a kinematic viscosity at 40°C of 44.4 mm²/s.

"Synthetic oil": Poly-α-olefin with a kinematic viscosity at 40°C of 8.0 mm²/s.

"Highly polar base oil": Ethylene glycol with a kinematic viscosity at 40°C of 8.6 mm²/s.

### <Additive mixture>

"Additive mixture": an additive mixture made by mixing an extreme pressure agent, an anti-wear agent, a metal deactivator, a detergent, a dispersant, and an antifoaming agent.

Each prepared lubricating oil composition was subjected to the measurements and evaluations of the various physical properties (1) to (6) above. The results are shown in Table 1.

### [Table 1]

**Table 1**

| | | | Example 1 | Example 2 | Comparative Example 1 | Comparative Example 2 | Comparative Example 3 | Comparative Example 4 |
|---|---|---|---|---|---|---|---|---|
| Composition | Mineral oil A | mass% | | 96.59 | | | | |
| | Mineral oil B | mass% | | | 96.59 | | | |
| | Mineral oil C | mass% | | | | 96.59 | | |
| | Mineral oil D | mass% | | | | | 96.59 | |
| | Synthetic oil | mass% | 96.59 | | | | | |
| | Highly polar base oil | mass% | | | | | | 96.59 |
| | Additive mixture | mass% | 3.41 | 3.41 | 3.41 | 3.41 | 3.41 | 3.41 |
| | Total | mass% | 100.00 | 100.00 | 100.00 | 100.00 | 100.00 | 100.00 |
| | Kinematic viscosity at 30°C of lubricating oil composition | mm²/s | 11.31 | 11.98 | 2.12 | 50.5 | 69.4 | Unmeasurable |
| | Kinematic viscosity at 40°C of lubricating oil composition | mm²/s | 8.367 | 8.745 | 1.763 | 32.08 | 44.64 | 8.737 |
| | Kinematic viscosity at 100°C of lubricating oil composition | mm²/s | 2.468 | 2.469 | 0.856 | 5.503 | 7.689 | Unmeasurable |
| Various physical properties evaluation | Viscosity index of lubricating oil composition | - | 123 | 106 | - | 107 | 141 | Unmeasurable |
| | Requirement (I) Silver bar temperature change amount ΔT | °C | 77.19 | 74.69 | 102.17 | 66.33 | 66.32 | 106.61 |
| | Requirement (II) Flash point | °C | 178 | 158 | 96 | 224 | 268 | 128 |
| | Requirement (III) Volume resistivity | Ωcm | 1.5×10⁹ | 3.0×10⁹ | 1.2×10⁹ | 6.3×10⁹ | 9.1×10⁹ | Unmeasurable |
| | Shell wear test wear scar diameter | mm | 0.49 | 0.84 | 1.11 | 0.78 | 0.68 | 1.06 |
| | Appearance observation of lubricating oil composition | - | A | A | A | A | A | F |
| | Transmittance (wavelength 600 nm) of lubricating oil composition | % | 98.5 | 98.0 | 98.5 | 95.0 | 96.0 | 0.5 |

Table 1 demonstrates that the lubricating oil compositions of Examples 1 and 2 are lubricating oil compositions that satisfy requirements (I) to (III). Therefore, the lubricating oil compositions are suitable for use in which it is circulated through a circulation circuit connected to at least a secondary battery, an electric motor, and a reduction gear to control the temperatures of at least the secondary battery, the electric motor, and the reduction gear.

### Reference Signs List

10 vehicle
11 secondary battery
12 electric motor
13 reduction gear
14 PCU
100 circulation system
111 battery cooling jacket
111a jacket inlet
111b jacket outlet
112 motor cooling jacket
112a jacket inlet
112b jacket outlet
120 circulation circuit
121 first path
121a first inflow pipe
1210 first outflow pipe
121d outlet
122 second path
122a second inflow pipe
122b second outflow pipe
122d outlet
130 oil pump
140 oil tank
141 PCU cooling jacket
141a jacket inlet
141b jacket outlet
150 radiator (oil cooler)
160 control valve
200 second circulation system
220 circulation circuit
221 first path
221a first inflow subsequent pipe
221b first outflow pipe
221d outlet
221e first inflow leading pipe
222 second path
222a second inflow subsequent pipe
222b second outflow pipe
222d outlet
222e second inflow leading pipe
231 first oil pump
232 second oil pump
233 pump
251 oil cooler
300 third circulation system
320 circulation circuit
321 first path
321a first inflow pipe
321b first outflow pipe
321d outlet
322 second path
322a second inflow pipe
322b second outflow pipe
322d outlet
333 pump
351 oil cooler
400 fourth circulation system
420 circulation circuit
421 first path
421a first inflow subsequent pipe
421b first outflow pipe
421d outlet
421e first inflow leading pipe
422 second path
422a second inflow subsequent pipe
422b second outflow pipe
422d outlet
422e second inflow leading pipe
431 first oil pump
432 second oil pump
433 pump
435 third path
500 fifth circulation system
520 circulation circuit
521 first path
521a first inflow pipe
521b first outflow pipe
521d outlet
522 second path
522a second inflow pipe
522b second outflow pipe
522c outlet
560 control valve

## Claims

1. A lubricating oil composition to be circulated in a circulation circuit connected to at least a secondary battery, an electric motor, and a reduction gear, and to be used to control temperatures of at least the secondary battery, the electric motor, and the reduction gear, wherein:
in accordance with a "cooling performance test method: method A" specified in JIS K2242:2012, a silver bar with an initial surface temperature T₀ of 200°C is placed in a lubricating oil composition at 80°C, and a surface temperature T₁₂ (°C) of the silver bar is measured 12 seconds later, and a silver bar temperature change amount ΔT calculated from T₀ - T₁₂ is 70°C or higher;
a flash point measured by a Cleveland open cup method (C.O.C method) in accordance with JIS K2265-4:2007 is 100°C or higher; and
a volume resistivity measured in accordance with JIS C2101:1999 is 1.0 × 10⁷ Ω·cm or more.

2. The lubricating oil composition according to claim 1, having a kinematic viscosity of 5.0 to 40.0 mm²/s at 30°C.

3. The lubricating oil composition according to claim 1 or 2, comprising a base oil and one or more lubricating oil additives selected from an anti-wear agent, a metal deactivator, a metal detergent, a dispersant, and an antifoaming agent.

4. The lubricating oil composition according to any one of claims 1 to 3, having a transmittance of 90% or more.

5. A circulation system, comprising a circulation circuit connected to at least a secondary battery, an electric motor, and a reduction gear,
wherein the circulation circuit is capable of circulating the lubricating oil composition according to any one of claims 1 to 4, and controls temperatures of at least the secondary battery, the electric motor, and/or the reduction gear.

6. The circulation system according to claim 5, wherein the circulation circuit further comprises a first path connected to the secondary battery and a second path connected to the electric motor and the reduction gear.

7. The circulation system according to claim 6, wherein the first path and the second path are both connected to the same radiator.

8. The circulation system according to claim 6 or 7, wherein the first path and the second path are connected in parallel.

9. The circulation system according to claim 6 or 7, wherein at least part of the circulation circuit connects the secondary battery, the electric motor, and the reduction gear in series.

10. The circulation system according to any one of claims 6 to 9, wherein the first path and the second path each comprise an oil pump, or either the first path or the second path has an oil pump.

11. The circulation system according to any one of claims 6 to 10, wherein the first path and the second path are both connected to the same oil tank.

12. The circulation system according to any one of claims 6 to 11, wherein the first path and the second path are both connected to the same oil pump.

13. The circulation system according to any one of claims 6 to 12, further comprising a control valve provided at a connection between the first path and the second path.

14. The circulation system according to any one of claims 6 to 13, further comprising a control valve for controlling a flow of the lubricating oil composition from an oil cooler to the first path and/or the second path.

15. The circulation system according to claim 13 or 14, wherein the control valve opens and closes depending on a temperature of the secondary battery.

16. The circulation system according to any one of claims 13 to 15, wherein the control valve opens and closes depending on temperatures of the electric motor and the reduction gear.
